# EUROPÄISCHE PATENTSCHRIFT

(11) **EP 0 408 988 B1**
(45) Veröffentlichungstag und Bekanntmachung des Hinweises auf die Patenterteilung: **14.12.1994**
(21) Anmeldenummer: 90112749.8
(22) Anmeldetag: 04.07.1990
(51) Int. Cl.: H02K 5/15, H02K 23/66, H02K 5/173, H02K 9/06, H02K 11/00, H02K 5/00

(54) **Elektrischer Universalmotor**
Universal electric motor
Moteur électrique universel

(30) Priorität: 15.07.1989 DE 3923421
(43) Veröffentlichungstag der Anmeldung: 23.01.1991
(60) Teilanmeldung: 94103521.4
(73) Patentinhaber: Kress-elektrik GmbH + Co. Elektromotorenfabrik, D-72406 Bisingen (DE)
(72) Erfinder: Kress, Willy, D-7457 Bisingen (DE); Binder, Alfred, D-7457 Bisingen (DE)
(74) Vertreter: Otte, Peter, Dipl.-Ing.

(56) Entgegenhaltungen:
- EP-A- 0 208 137
- EP-A- 0 235 443
- EP-A- 0 329 249
- DE-U- 8 520 258
- GB-A- 2 167 909
- US-A- 2 817 827
- US-A- 3 440 465
- US-A- 3 699 366

## Beschreibung

### Stand der Technik

Die Erfindung geht aus von einem elektrischen Universalmotor nach dem Oberbegriff des Anspruchs 1 und umfaßt auch ein automatisiertes Verfahren zur Herstellung eines solchen Universalmotors nach dem Oberbegriff des Anspruchs 13.

Bei einem bekannten elektrischen Motor dieser Art (US-PS 46 13 781) fassen die beiden Lagerschilde den Stator zwischen sich ein und sind mit Hilfe von innen liegenden Spannschrauben miteinander verschraubt, wobei das Material des bürstenseitigen B-Lagerschilds so dick bemessen ist, daß die Spannschrauben unmittelbar in entsprechende Gewindebohrungen eingesetzt und verschraubt werden können, wobei sie ferner durch Bohrungen im von den Lagerschilden eingefaßten Statorpaket geführt sind.

Dabei ist das A-Lagerschild nicht geeignet, gleichzeitig zur Erzielung einer einwandfreien Zentrierung das auf dieser Seite erforderliche Rotorlager zu bilden, sondern es ist ein mit dem A-Lagerschild verschraubtes zusätzliches Getriebegehäuse für die Aufnahme eines Getriebes speziell einer Heckenschere vorgesehen, welches offensichtlich auch das dortige Rotorwellenlager bildet. - Genaueres ist nicht angegeben. Die Kohlebürsten sind unmittelbar und ohne die Möglichkeit einer Verdrehbarkeit mit dem Material des B-Lagerschilds verbunden.

Die Lamellen des Statorpakets eines elektrischen Motors miteinander und gegebenenfalls mit angrenzenden Gehäuseteilen zu verspannen und zu fixieren ist allgemein bekannt (EP-A-0 235 443), wobei auf der einen Seite des Motors ein topfförmiges Lagerschild angeordnet ist, welches in Schlitzen Montageblöcke aufnimmt, die der gewindemäßigen Aufnahme von Spannschrauben für das Statorpaket dienen, die gleichzeitig ein mittleres Gehäuseteil in die Verspannung mit einbeziehen. An die Außenseite dieses mittleren Gehäuseteils ist eine endseitige Lagerplatte angesetzt, die als A-Lagerschild auf der Lüfterseite des Rotors dient. Dieses plattenförmige A-Lagerschild ist von den Spannschrauben nicht erfaßt; eine Beziehung zwischen den Montageblöcken im gegenüberliegenden Teilgehäuse des Motors und dem Lüfterflügel auf der anderen Seite besteht nicht.

Bekannt ist es auch (US-A-2 817 827), für die Lagerung eines Elektromotors unmittelbar Wandbereiche eines den Elektromotor aufnehmenden Werkzeug-Maschinengehäuses zu benutzen, wobei die Lamellen des Statorpakets durch Spannschrauben zusammengehalten sind, die auf einer Seite ein äußeres Zwischengehäuseteil, welches jedoch nicht zum B-Lagerschild gehört, erfassen und auf der anderen Seite in eine innere Ringstruktur eingeschraubt sind, die sonst keine weiteren Bezüge zum äußeren Gerätegehäuse bzw. zum Lagerungsbereich des auf dieser Seite befindlichen A-Lagerschilds aufweist.

Schließlich ist es bekannt (US-A-3 699 366), die Lamellenschichtung des Statorpakets eines im Gehäuse eines Handwerkzeugs angeordneten Elektromotors mittels Gewindebolzen miteinander zu verschrauben, die auf einer Seite in einen isolierenden Abstandshalter, der insofern als Mutter für die Spannschrauben wirkt, eingeschraubt sind. Dieser Abstandshalter ist dem bürstenseitigen Ende des Elektromotors gegenüberliegend angeordnet und ist als Luftleitring für die Ventilator-Kühlluftströmung ausgebildet. Die Spannschrauben für das Statorpaket stehen in keiner Verbindung mit in diesem Fall ohnehin nicht vorhandenen A- und B-Lagerschilden, da der Motor von einem zylinderförmigen Blechgehäuse aufgenommen ist, welches nur auf einer Seite in der Lage ist, ein Motorlager auszubilden.

Bei einem untertauchbaren, speziell zum Pumpenantrieb geeigneten Motor ist es ferner bekannt (US-PS 28 45 551), das Statorpaket in einem zentralen Hauptrohr zu lagern, auf welches beidseitig äußere Abschlußdeckel, die auch die Rotorlagerung enthalten, über Spannschrauben mit ihren Stirnflächen gepreßt werden. Hierzu verfügt das innere Hauptrohr über Innenringe, die im Hauptrohr mit Hilfe von die Hauptrohrwandung durchsetzenden Halteschrauben gesichert sind. Die beiden äußeren, die Rotorlager bildenden Motorabschlußdeckel werden daher nicht unmittelbar miteinander verspannt und lagern auch nicht direkt mit Hilfe von Einpässen das Statorpaket, so daß nicht ausgeschlossen ist, daß sich durch diese jeweils indirekten Lagerungen Probleme hinsichtlich der gewünschten, möglichst zentrischen Lagerung des Rotors zum Stator über seine Rotorlagerungen ergeben können.

In vergleichbarer Weise ist bei einem weiteren untertauchbaren Motor (US-PS 33 69 136) jedenfalls ein unterer Lagerrahmen für das dortige Rotorwellenende mit Hilfe von innenliegenden Spannschrauben dadurch mit einem mittleren Hauptrohr verbunden, daß an den Gewindeenden der Spannschrauben rechteckförmige und hierdurch an einer Drehbewegung gehinderte Muttern angeordnet sind, die an inneren, von inneren Ausnehmungen des Hauptrohrs aufgenommenen Vorsprüngen anliegen, so daß ein festes Zusammenspannen jeweils der endseitigen Lagerrahmen mit dem mittleren Hauptrohr möglich ist. Diese innenliegenden Verschraubungen nehmen, was auch für den Motor entsprechend US-PS 28 45 551 zutrifft, nach innenliegend sehr viel Raum weg und verhindern auch, da sie nach innen vorstehen, eine lediglich von einer Seite durchzuführende, dann gegebenenfalls automatisierte Montage des Motors.

Schließlich ist es bei dem gasgefüllten Ständer einer elektrischen Großmaschine bekannt (DE-OS 21 01 007), den einen Kern einschließenden mittleren Teil des Ständers durch Spannrippen und Preßringe zusammenzudrücken, wobei Ständerendteile mittels der für das Zusammenpressen des Ständerkerns erforderlichen Preßringe gehalten, aber nicht selbst verspannt sind - diese Endteile, die offensichtlich auch keine topfförmigen Lagerschilde mit Rotorwellenlagerungen, sondern Abdeckungen sind, sitzen auf den Spannringen lediglich auf, wobei für die Lagerungen der Rotorwelle, wie bei Großmaschinen bekannt, Lagerpratzen unabhängig von Verstrebungen gehalten sind, die von einem Lagerblock ausgehen.

Bei einem weiteren bekannten Universalmotor für ein Elektrohandwerkzeug (DE-PS 37 31 079), der ferner Umschaltmöglichkeiten für Rechts- und Linkslauf gleichzeitig mit einer Bürstenverstellung aufweist, ist das ohne Lager für die Rotorwelle ausgebildete, in etwa zylindrische Motorgehäuse gleichzeitig Teil des Elektrohandwerkzeugs und wird von angrenzenden äußeren Gehäuseteilen des Elektrohandwerkzeugs eingefaßt; diese Bauart ist deshalb erforderlich, weil das Motorgehäuse gleichzeitig seitlich Schlitze aufweist, durch welche Betätigungsnasen eines verdrehbaren Bürstenträgerrings ragen.

Bei einem weiteren bekannten elektrischen Antriebsmotor (DE-OS 31 49 106) ist der von einem Permanentmagneten gebildete Stator von einem ringförmigen, einen magnetischen Rückschluß bildenden Blechstreifen umgeben, der beidseitig axial an Lagerträger angrenzt und mit diesen verbunden ist. Diese Lagerträger sind bügelförmig ausgebildet und nehmen je ein Wellenlager für die Rotorwelle auf. Eines dieser Wellenlager ist als Wälzlager ausgebildet, welches direkt in einer topfförmigen Einsenkung des Lagerträgers gehalten ist und über die Einsenkung um einen vorgegebenen Abstand nach außen ragt. Hierdurch ist es möglich, dieses zur Ankerwelle zwangsläufig absolut zentrisch liegende Lagerelement, nämlich im speziellen Fall den Außenring des Wälzlagers, zum Auffangen und Zentrieren einer an diesem Motor angeordneten weiteren Baugruppe, beispielsweise eines Getriebes, zu verwenden. Über die Möglichkeit einer elektrischen Verschaltung ist nichts ausgesagt; größerer Aufwand ist hier allerdings auch nicht erforderlich, da der Stator aus einem Permanentmagneten besteht.

Problematisch bei den bekannten Elektromotoren bzw. Bauteilen für diesen ist, daß zwar durch gewisse Einzelmerkmale vereinfachende Lösungen erreicht werden, dennoch hinsichtlich des Aufwands an Einzelteilen, deren Zusammenfügen und der Montage des Elektromotors wesentlich zu komplexe Strukturen vorliegen, die beispielsweise auch einer im wesentlichen automatisierten Montage und einer entsprechend kostengünstigen Herstellung von Elektromotoren im Wege stehen.

Der Erfindung liegt daher die Aufgabe zugrunde, einen elektrischen Universalmotor zu schaffen, der bei besonders einfachem Aufbau mit nur wenigen Einzelteilen auskommt und eine hervorragende Funktionssicherheit mit hoher Dauerleistung verbindet.

### Vorteile der Erfindung

Die Erfindung löst diese Aufgabe mit den Merkmalen des Anspruchs 1 bzw. des Verfahrensanspruchs 13 und hat den Vorteil, daß ein in sich abgeschlossener Universalmotor geschaffen ist, der eine präzise und sichere Stabilisierung der einzelnen Motorteile zueinander einschließlich genauer Zentrierung des Rotors mit umlaufend gleichmäßigem Luftspalt zum Stator sichert.

Hierbei ergibt sich ferner der Vorteil, daß ein solcher Universalmotor aufgrund seiner ausgeprägten Schichtbauweise auch auf teil- oder vollautomatischen Fertigungsanlagen herstellbar ist, ohne daß hierdurch Stabilität und vor allem die genaue Zentrierung des Rotors mit Bezug auf den diesen umgebenden Stator bzw. dessen Polschuhe leiden. Begünstigt wird dieser Umstand noch dadurch, daß der Motor aus nur einigen wenigen Einzelteilen besteht und dennoch die zusätzliche Möglichkeit einer Umschaltung zwischen Rechts- und Linkslauf mit einer mittleren Nullposition bei ebenfalls geringstem Verschaltungsaufwand im Bereich der Kohlebürsten bietet.

Besonders vorteilhaft ist ferner, daß beide Lagerschilde, also das antriebsseitige A-Lagerschild und das bürstenseitige B-Lagerschild aus Kunststoff hergestellt werden können bei allgemeiner Topfform, so daß sich eine besonders gute Isolierung (Doppelschutzisolierung) ergibt, dennoch aber, zum Teil bedingt durch gesonderte Stabilisierungsplatten und Elemente, eine einwandfreie Positionierung der Teile zueinander bei festen axialen Verschraubungsmöglichkeiten sichergestellt ist, wobei ferner von besonderem Vorteil ist, daß der Universalmotor im jeweiligen Maschinen- oder Gerätegehäuse, dem er zugeordnet wird, keine zusätzlichen Stützungsteile benötigt, an die er sich anlehnen muß, sondern in sich abgeschlossen volle Stabilität aufweist und ferner metallische Befestigungs- und Angriffspunkte bildet, wie beispielsweise einen metallischen Bund im Bereich des abtriebsseitigen Lagers mit, falls gewünscht, zusätzlichen Gewindedurchzügen, so daß auch der Anbau eines entsprechenden Getriebes durch die zur Verfügung stehenden Spannflächen problemlos möglich ist. Dabei sind die Lagerschilde über das innenliegende Blechpaket des Stators beidseitig gesichert bei durch die Schichtbauweise sichergestellter einwandfreier Luftführung und Kühlung durch das Motorinnere, wobei besonders auch intensive Kühlluftströme im Bereich der Kohlen und der Kontaktierungen auftreten.

Vorzugsweise weisen beide Lagerschilde zur Erzielung einer exakten Zentrizität gesonderte Zentrier- und Kugellageraufnahmen auf, wobei in das A-seitige Lagerschild eine metallische Stabilisierungsplatte eingesetzt und an dessen Bodenbereich sicher fixiert ist, die in einer Ausbauchung das dortige Kugellager für die Rotorwelle aufnimmt und durch den nach außen hervorragenden Bund weitere Befestigungsmöglichkeiten bietet.

Der auf diese Weise eine in sich geschlossene komplette funktionsfähige Einheit bildende Universalmotor in Schichtbauweise ist für konsequente Großserienfertigung automatisierbar, wobei durch den integrierten Einbau eines Lüfters eine besonders wirkungsvolle Kühlluftströmung durch den Motor sichergestellt ist.

Ein besonderer Vorteil ist noch darin zu sehen, daß axial angrenzend an das Lüfterrad ein Luftleitring innerhalb des A-Lagerschilds angeordnet ist, der nach Art einer Bajonettfassung eingesetzt wird und gleichzeitig den Zuganker für die axiale Verschraubung und Endfixierung beider Lagerschilde, des Stators und der Rotorlager bildet.

Bei der automatischen Montage kann der Zusammenbau des Motors von einer Ebene, also von einer Seite ausgehend im schichtweisen Aufbau erfolgen, wobei durch die gegebene Möglichkeit der kompletten externen Montage des Motors dieser auch außerhalb des Geräts, in dem er eingebaut werden soll, endgeprüft werden kann, da er, auch ohne Einbau in das jeweilige Gerät, eine funktionsfähige, in sich abgeschlossene komplette Einheit darstellt. Durch die konsequente Schichtbauweise ist diese automatisierbare Großserienfertigung möglich.

### Zeichnung

Ausführungsbeispiele der Erfindung sind in der Zeichnung dargestellt und werden in der nachfolgenden Beschreibung näher erläutert. Es zeigen:
- Fig. 1: eine mögliche Ausführungsform des erfindungsgemäßen elektrischen Universalmotors in der gebrauchsmäßigen Endmontageform im Längsschnitt und
- Fig. 2: zeigt einen der Darstellung der Fig. 1 vergleichbaren Längsschnitt durch die Ausführungsform des elektrischen Universalmotors, jedoch in einer um 90° gegenüber der Fig. 1 gedrehten Ansicht, wobei die
- Fig. 3: im Längsschnitt das in der Darstellung der Fig. 1 rechte, also B-Lagerschild zeigt;
- Fig. 4: einen Schnitt längs der Linie V-V der Fig. 1, jedoch mit Darstellung lediglich des A-Lagerschilds, während die
- Fig. 5: einen Querschnitt durch das A-Lagerschild mit eingesetztem und durch Verdrehung in seine gesicherte Endposition überführten Luftleit- und Zugankerrings darstellt.

### Beschreibung der Ausführungsbeispiele

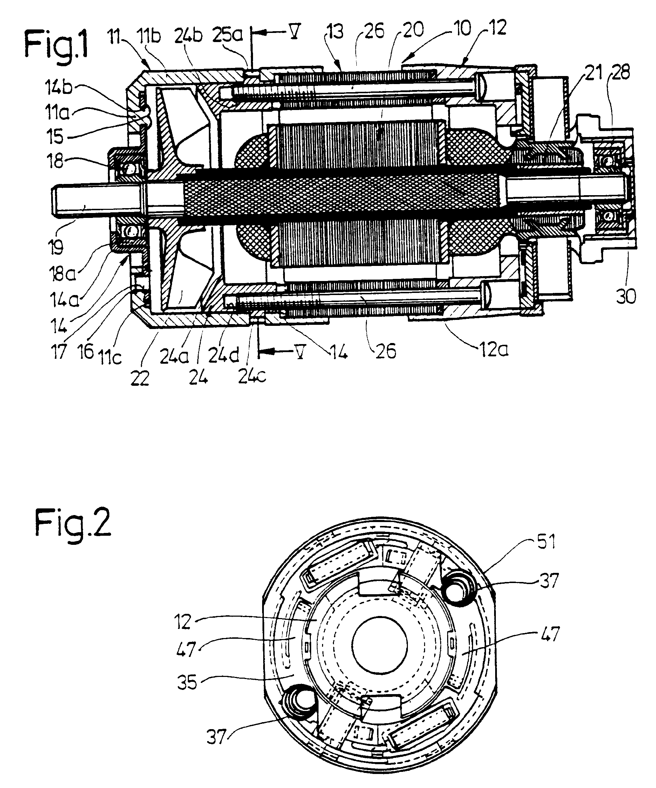

In Fig. 1 ist der elektrische Universalmotor mit 10, das in der Zeichnung der Fig. 1 linke, also antriebsseitige A-Lagerschild mit 11 und das rechte, bürstenseitige B-Lagerschild mit 12 bezeichnet. Der im folgenden zunächst gegebene Überblick über den Gesamtaufbau orientiert sich in der Beschreibung der Einzelteile des Motors an der sukkzessiven Abfolge der Montage dieser Teile, so wie diese auch in der voll- oder teilautomatischen Fertigung zusammengesetzt und miteinander gesichert werden, wobei der Universalmotor, in der Zeichenebene von links beginnend sukkzessive aufgebaut wird.

Das linksseitige A-Lagerschild hat, wie grundsätzlich auch das B-Lagerschild, einen allgemeinen topfförmigen Aufbau und umfaßt eine Bodenplatte 11a, die bevorzugt einstückig in den hochgezogenen Rand 11b übergeht. Bevorzugt besteht das A-Lagerschild und auch das B-Lagerschild aus einem geeigneten, zähen Kunststoffmaterial, wobei der Rand 11b durch eine Abschulterung 11d einen Einpaß zur Aufnahme des Stators 13 auf dieser Seite, gegebenenfalls unter Zwischenlegung einer Dichtung 14, bildet.

Ferner verfügt die Topfform des A-Lagerschilds im Bereich der Bodenplatte über eine kreisförmige Ausnehmung 11c, die der Aufnahme einer weiter unten noch zu erläuternden Stabilisierungs- und Lagerplatte 14 dient. Zur Befestigung der Stabilisierungsplatte 14 am inneren Topfboden des A-Lagerschilds weist der Topfboden vorzugsweise gleichmäßig über den Umfang verteilt nach innen vorspringende Materialzapfen 15 auf; ferner sind noch Bohrungen 16 im Topfboden des A-Lagerschilds vorgesehen, die der Aufnahme und dem Durchtritt von durchgezogenen Gewindeöffnungen 17 in der Stabilisierungsplatte 14 dienen.

Die Stabilisierungsplatte 14 selbst nimmt in einer zentralen Ausstülpung 14a den Außenring 18a eines ersten Kugellagers oder Wälzlagers 18 für die Rotorwelle 19 auf. An diesem Ende tritt die Rotorwelle 19 auch über die Umrißform des Motors hinaus, so daß hier in geeigneter, nicht weiter zu beschreibender Weise das vom Motor erzeugte Drehmoment abgenommen werden kann.

Die Stabilisierungsplatte wird daher als erstes bei der Montage in die Topfform des A-Lagerschilds eingebracht und erhält ihre anfängliche Fixierung durch das Eindringen der Vorsprünge 15 in entsprechende Durchtrittsbohrungen 14b der Stabilisierungsplatte, mit einem sich daran anschließenden Montageschritt, der durch entsprechende Erhitzung, etwa durch Laser-Beaufschlagung eine Aufweitung im überstehenden Kopfbereich der Zapfen 15 bewirkt, so daß die Stabilisierungsplatte fest mit dem Boden des A-Lagerschilds verankert wird. Dabei tritt auch die äußere Ringform der innen das Kugellager 18 aufnehmenden Ausbauchung über die hintere Topfbodenfläche des A-Lagerschildes hervor, so daß an dieser Stelle Spannmittel o.dgl. angreifen können zur Befestigung des Motors bzw. zur Befestigung von an die Ausgangswelle anzusetzenden Getrieben u.dgl.

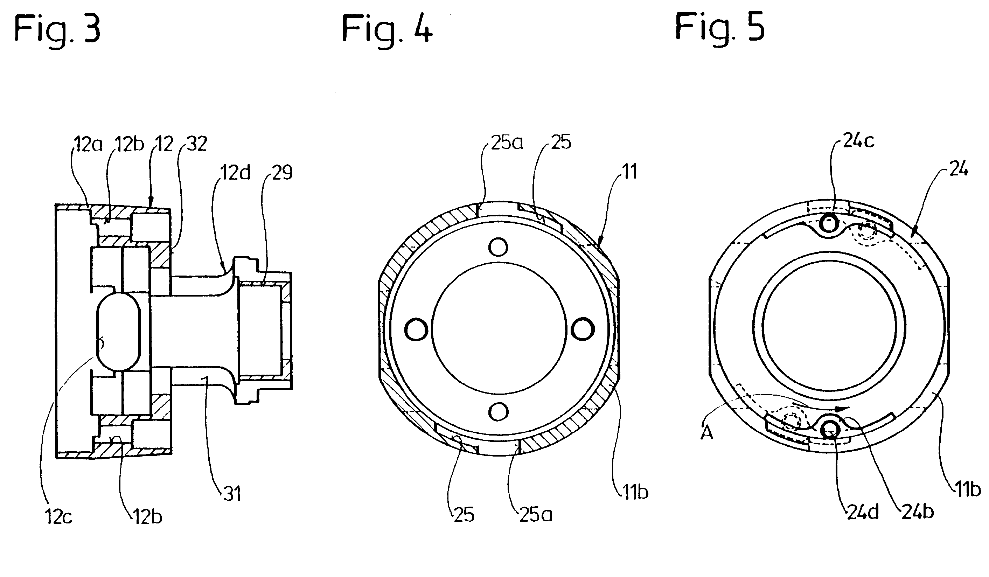

Anschließend kann die vormontierte Gesamtheit aus Rotorwelle 19 mit Rotor 20, endseitig auf einen Ringanschlag der Rotorwelle 19 aufgeschobenen Kugellager 18 einschließlich Kollektor 21 sowie zwischen dem Kugellager 18 und dem Rotor fest auf der Rotorwelle 19 gelagertem Lüfterrad 22 in das A-Lagerschild eingesetzt werden. Dabei verfügt, wie hier genauer die Darstellung der Fig. 3 zeigt, die Topfform des A-Lagerschildes über sich über einen Teilumfang erstreckende Einschnitte oder Öffnungen 23 in Höhe des Lüfters 22, so daß im Betrieb des Elektromotors der Lüfter 22 an dieser Stelle von ihm durch das Motorinnere von rechts angesaugte Kühlluft frei nach außen abblasen kann.

Der weitere Aufbau bzw. die folgende Montage setzt sich dann so fort, daß in die Topfform des A-Lagerschildes 11 ein weiteres ringförmiges Bauteil eingeschoben wird, welches im folgenden mit Bezug auf von ihm entwickelte Hilfseigenschaften für die Durchlüftung und Kühlung in Verbindung mit dem Lüfter 22 als Luftleitring 24 bezeichnet wird, welches aber noch eine weitere wichtige konstruktive Aufgabe erfüllt, auf die gleich noch eingegangen wird.

Der Luftleitring 24 ist zylindrisch ringförmig ausgebildet mit einer nach innen vorspringenden, an das Lüfterrad 22 angrenzenden Ringkante 24a, so daß die Ansaugwirkung des Lüfters 22 in diesem Bereich wesentlich verbessert wird, der durch seine Drehbewegung aus dem Zentrum um die Rotorwelle 19 herum Luft ansaugt, dort für ein Teilvakuum sorgt, welches gleichzeitig aus dem Motorinneren von rechts für eine entsprechende Strömungsbewegung von Kühlluft sorgt und diese Luft dann radial durch die Lüftungsöffnungen 23 des Topfgehäuses ausstößt.

Die Außenringfläche des Luftleitrings 24 paßt bündig in die Innenöffnung der A-Lagerschild-Topfform, wobei zur weiteren Verankerung zwischen diesen beiden Komponenten eine Verrastung vorgesehen ist, die bei dem dargestellten Ausführungsbeispiel als Bajonettsicherung bezeichnet werden kann. Im einzelnen verfügt hierzu, wie die Fig. 5 genauer zeigt, der Topfrand 11b des A-Lagerschildes 11, beispielsweise diametral gegenüberliegend, über axiale Längsnuten 25, die in einer vorgegebenen Höhe angrenzend an den Lüfter 22 seitlich in Wanddurchbrüche 25a des Lagerschildrands 11b übergehen. Entsprechend hierauf ausgerichtet weist die zylindrische Ringform des Luftleitrings 24 axiale Verlängerungen von einer gleichzeitig hülsenartigen Verdickung 24b auf, die nach außen in Vorsprünge 24c (Fig. 1) übergehen, die den Durchbrechungen 25a des A-Lagerschildrands entsprechen. Dabei befinden sich in den axialen Verlängerungen 24b gleichzeitig Axialbohrungen 24c, die der Aufnahme von einem Zusammenspannen der Motoreinzelteile dienenden Schrauben 26 dienen - hierauf wird weiter unten noch eingegangen.

Der Luftleitring 24 wird also zunächst so axial in die Topfform des A-Lagerschilds eingegeben, daß dessen nach außen ragende, einer Verrastung mit dem Lagerschild dienenden Vorsprünge 24c axial längs der Nuten 25 nach unten gleiten, wodurch es auch gelingt, den Luftleitring 24 in die Topfform des A-Lagerschilds 11 einzuschieben. Sobald der Luftleitring dann die in den Fig. 1 und 3 gezeigte Endposition (auf Anschlag und gebildet durch die Enden der Längsnuten 25) erreicht hat, wird der Luftleitring so weit verdreht, daß die Vorsprünge 24c in die Ausnehmunge 25a einfallen können, so daß sich die Endposition,wie in Fig. 1 und noch genauer in der Darstellung der Fig. 5 gezeigt, ergibt, bei welcher die Vorsprünge 24c in die fensterartigen Ausschnitte 25a eingefallen sind und so den Luftleitring sicher in dieser Position fixieren. Die erforderliche Verdrehung des Luftleitrings ist in Fig. 5 durch den Pfeil A dargestellt. Es ergibt sich so eine Bajonettsicherung des Luftleitrings im Topfgehäuse des A-Lagerschilds und gleichzeitig eine feste axiale Fixierung dieses Luftleitrings, der in seiner zweiten Position als Zuganker für das Verspannen der beiden A- und B-Lagerschilde 11 und 12 durch die Spannschrauben 26 dient.

Tatsächlich wird nach diesem Montageschritt der Luftleitringpositionierung das in der Zeichenebene linke B-Lagerschild ebenfalls bis auf Anschlag des von diesem durch eine Abschulterung 12a gebildeten Einpasses auf das Statorpaket aufgeschoben, wobei eine besonders vorteilhafte Ausgestaltung vorliegender Erfindung noch darin zu sehen ist, daß durch die Einpaßbildung der beiden topfförmigen Lagerschilde 11 und 12 die Lagerschildränder das Statorpaket beidseitig aufnehmen und mit eigenen Rändern über eine vorgegebene Distanz (Fig. 1) umfassen und fixieren, was besonders vorteilhaft zur erheblichen Stabilität des erfindungsgemäßen Universalmotors beiträgt.

Das B-Lagerschild 12 ist in Fig. 3 nochmals gesondert dargestellt und umfaßt im einstückigen Aufbau zunächst die zylindrische, topfartige Grundform 12a mit der Einpaß-Randbildung, wobei am Außenrand auch die Durchtrittsöffnungen 12b für die Spannschrauben 26 unter Bildung einer Abschulterung für die Anlage der Spannschraubenköpfe dargestellt sind. In diesem Bereich befinden sich ferner ovale Luftdurchtrittsöffnungen 12c angrenzend zu den Wickelköpfen 26 des Statorpakets; ähnliche Durchbrechungen in Höhe der Wickelköpfe befinden sich auch im Rand 11b des A-Lagerschildes und sind dort mit 27 bezeichnet. Hierdurch ist sichergestellt, daß auch im Motorstillstand bei dann ebenfalls stillstehendem Lüfter eine wirksame Kühlung erfolgt.

Der zylindrische Randbereich 12a des B-Lagerschilds geht in eine zentrale axiale Verlängerung 12d über, die einen Ansatz bildet zur Aufnahme des rechtsseitigen Wälzlagers 28 der Rotorwelle 19. Das Kugellager 28 kann, wie in Fig. 1 gezeigt, in der vom Ansatz 12d gebildeten Aufnahme 29 gegebenenfalls unter Zwischenlage einer metallischen, dann mehrfach abgetreppten Einlage 30 sitzen.

Für den Durchtritt der an einem Schaltring sitzenden Kohlebürsten weist der Ansatz 12d entsprechend großzügig bemessene Durchtrittsöffnungen 31 auf, die auch eine Drehbewegung der Kohlebürsten auf dem Kollektor zur Rechts-Linkslauf-Umschaltung ermöglichen.

Nach Aufschieben des B-Lagerschilds 12 auf die bisher erläuterte Teilmontagegruppe aus A-Lagerschild, Stabilisierungsplatte, Rotor mit Lüfter und Luftleitring wird das ganze durch die schon erwähnten Spannschrauben 26 miteinander verspannt, die durch die Durchtrittsbohrungen 12b, durch Durchtrittsbohrungen im Lamellenpaket des Stators bis in die Aufnahmebohrung 24c des Luftleitrings 24 geführt sind, der hierdurch gleichzeitig den Zuganker für die Verspannung bildet.

Das Einschrauben der mit einem entsprechenden selbstschneidenden Steilgewinde versehenen Spannschrauben 26 in die Aufnahmegewindebohrungen 24c des Luftleitrings bewirkt gleichzeitig, wie am besten aus Fig. 1 erkennbar, daß die Materialvorsprünge 24c verstärkt und kräftig in die Ausnehmungen oder Durchbrechungen 25a im A-Lagerschildrand 11b hineingepreßt werden, so daß gleichzeitig mit dem Zusammenspannen der sichere formschlüssige Sitz des Zugankers und gleichzeitig Luftleitrings garantiert ist. Gegebenenfalls kann der Formübergang zwischen den Vorsprüngen 24c und den Ausnehmungen 25a noch so getroffen sein, daß diese sich durch die zunehmende Verspannung immer stärker ineinander formschlüssig verkeilen, etwa durch eine Art Schwalbenschwanzsicherung; hierbei können die ineinandergreifenden Flächen noch Schrägen aufweisen. Obwohl also bis zu diesem Montageschritt noch keine Positionierung von Kohlen oder elektrischen Kohlen oder elektrischen Kontakten vorgenommen worden ist, ist der Universalmotor bis auf diesen Bereich vollständig montiert einschließlich der beiden Lager 18 und 28 für die Rotorwelle 19 und der einwandfreien Zentrierung des Rotors zwischen den beiden miteinander und mit dem Statorpaket verschraubten und verspannten A- und B-Lagerschilden.

## Patentansprüche

1. Elektrischer Universalmotor für beliebige Antriebe, insbesondere Elektrohandwerkzeuge, Büromaschinen, Haushaltsgeräte, motorisch angetriebene Gartenwerkzeuge u. dgl., mit Stator (13) und Statorwicklungen, drehbar gelagertem Rotor (20) mit Kollektor (21), beidseitigen, gleichzeitig die Lagerung für den Anker bildenden Lagerschilden sowie mit auf einem um vorgegebene Winkelbeträge relativ verdrehbaren Schaltring (35) angeordneten (Kohle)-Bürsten und ihren Halterungen, wobei in den Schwenkendlagen des Schaltringes die Feldwicklungen des Stators und die Ankerwicklung jeweils unterschiedlich gepolt sind zur Drehrichtungsumkehr, dadurch gekennzeichnet, daß in dem topfförmigen A-Lagerschild ein ringförmiger Zuganker (24) formschlüssig aufgenommen ist, der der innenliegenden Verspannung von A- und B-Lagerschild (11, 12) mit dazwischenliegendem Statorpaket (13) dient.

2. Elektrischer Universalmotor nach Anspruch 1, dadurch gekennzeichnet, daß der Zuganker (24) gleichzeitig als Luftleitring für die von einem Lüfterrad (22) angesaugte Kühlluft dient.

3. Elektrischer Universalmotor nach Anspruch 2, dadurch gekennzeichnet, daß der von dem Zuganker (24) gebildete Luftleitring eine nach innen vorspringende Ringschulter (24a) aufweist zur Konzentrierung und Führung der den Elektromotor axial durchströmenden, von dem Bürsten- und Kontaktflächenbereich ausgehenden Luftströmung.

4. Elektrischer Universalmotor nach Anspruch 3, dadurch gekennzeichnet, daß in den Topfrandwandungen (11b, 12a) des A-Lagerschilds und des B-Lagerschilds (12) in Höhe der Wickelköpfe (26) des Stators Kühlluft-Durchtrittsöffnungen (12c; 27) angeordnet sind.

5. Elektrischer Universalmotor nach einem der Ansprüche 1 bis 4, dadurch gekennzeichnet, daß die Topfwandrandungen des A-Lagerschilds (11) bzw. des B-Lagerschilds (12) das Lamellenpaket des Stators beidseitig um vorgegebene Beträge (B, B′) in sich aufnehmen und fixieren.

6. Elektrischer Universalmotor nach einem der Ansprüche 1 bis 5, dadurch gekennzeichnet, daß der Zuganker (24) in der Topfform des A-Lagerschildes bajonettartig verankert ist.

7. Elektrischer Universalmotor nach Anspruch 6, dadurch gekennzeichnet, daß zur Einbringung und Verankerung des Zugankers (24) in der Topfform des A-Lagerschildes diese innere axiale Längsnuten (25) aufweist zur Aufnahme und Einpassung von äußeren Wandvorsprüngen (24c) des Zugankers (24) bei der Einführung, die seitlich angrenzend in Wanddurchbrechungen (20a) übergehen, in welche die Vorsprünge (24c) des Zugankers (24) bei einer sich an die axiale Einführbewegung anschließenden Verdrehbewegung einfallen.

8. Elektrischer Universalmotor nach Anspruch 6 oder 7, dadurch gekennzeichnet, daß im Bereich der die Verankerung zwischen Zuganker (24) und dem A-Lagerschild ermöglichenden Wandvorsprünge (24c) ösenartige Verdickungen und Verlängerungen (24b) vorgesehen sind, die gleichzeitig Gewindeaufnahmebohrungen (24d) für die das A-Lagerschild mit dem B-Lagerschild zusammenspannenden Spannschrauben (26) bilden derart, daß durch das Eindringen der Spannschrauben die Vorsprünge (24c) stärker und formschlüssig in die Wanddurchbrechungen im Rand (11b) des A-Lagerschildes gepreßt sind.

9. Elektrischer Universalmotor nach Anspruch 8, dadurch gekennzeichnet, daß im Bereich der Verankerung zwischen den Vorsprüngen (24c) des Zugankers (24) und den Wanddurchbrechungen (25a) im Randbereich des A-Lagerschildes Schrägen bzw. Schwalbenschwanzübergänge gebildet sind zur Verstärkung und Sicherung des festen Sitzes beim Zusammenspannen.

10. Elektrischer Universalmotor nach einem der Ansprüche 1 bis 9, dadurch gekennzeichnet, daß am Topfboden (11a) des topfförmigen A-Lagerschilds (11) eine metallische, eine Ausstülpung zur Aufnahme des Rotorwellenkugellagers (18a) aufweisende Stabilisierungsplatte (14) eingelegt und befestigt ist.

11. Elektrischer Universalmotor nach Anspruch 10, dadurch gekennzeichnet, daß die mit dem Topfboden (11a) des A-Lagerschilds (11) verbundene Stabilisierungsplatte (14) durch im Kopfbereich verbreiterte Materialzapfen (15) des A-Lagerschild-Topfbodens gehalten und gesichert ist, die Durchbrechungen der Stabilisierungsplatte durchsetzen und daß in der Stabilisierungsplatte ferner durch Durchtrittsöffnungen im Topfboden zugängliche Gewindebohrungen (17) angeordnet sind.

12. Elektrischer Universalmotor nach Anspruch 10 oder 11, dadurch gekennzeichnet, daß die das Kugellager (18) für die Rotorwelle (19) aufnehmende Ausbauchung (14a) der Stabilisierungsplatte (14) als Spann- und Befestigungselement für den Anbau weiterer Komponenten (Getriebe) bzw. Befestigung des Motors über die äußere Fläche des A-Lagerschild-Topfbodens hinausragt.

13. Verfahren zur automatischen Herstellung des elektrischen Universalmotors nach einem der Ansprüche 1 bis 12, dadurch gekennzeichnet, daß
a) in ein erstes topfförmiges A-Lagerschild eine das entsprechende Wellenlager aufnehmende Stabilisierungsplatte eingesetzt und befestigt wird, daß
b) daran anschließend der Rotor mit Rotorwelle und Wellenlagern und auf der Welle angeordnetem Lüfter eingeschoben und
c) ein Luftleitring/Zuganker in die A-Lagerschild-Topfform eingesetzt und, vorzugsweise durch eine Bajonettsicherung, verankert wird, daß anschließend
d) das B-Lagerschild auf den in einen Engpaß des A-Lagerschildes eingesetzten Stator aufgesetzt und
e) alle Teile mittels innerer Spannschrauben die von einer Stirnfläche des B-Lagerschildes ausgehen und in Gewindeaufnahmen des Luftleitrings/Zugankers eingreifen, miteinander verspannt werden.

## Claims

1. Electrical universal motor for any drive, in particular electric hand tools, office machines, domestic devices, motor-driven garden tools and the like, having a stator (13) and stator windings, rotatably mounted rotor (20) with commutator (21), on both sides end shields which simultaneously form the bearing for the armature, and having (carbon) brushes arranged on a connector ring (35) which can be rotated relatively about predetermined angular amounts, and their mountings, in the pivotal end positions of the connector ring the field windings of the stator and the armature winding each having different poles for the purpose of reversing the direction of rotation, characterized in that there is received as a shaped fit in the cup-shaped A end shield an annular anchor body (24) which serves to internally tension the A and B end shields (11, 12) with the stator pack (13) lying in between.

2. Electrical universal motor according to Claim 1, characterized in that the anchor body (24) at the same time serves as an air guide ring for the cooling air drawn in by a fan impeller (22).

3. Electrical universal motor according to Claim 2, characterized in that the air guide ring formed by the anchor body (24) has an inwardly projecting annular shoulder (24a) for concentration and guidance of the air flow which flows axially through the electric motor and comes from the brush and contact surface region.

4. Electrical universal motor according to Claim 3, characterized in that openings (12c; 27) for air cooling are arranged in the cup edge walls (11b, 12a) of the A end shield and of the B end shield (12) at the end regions (26) (sic) of the winding of the stator.

5. Electrical universal motor according to one of Claims 1 to 4, characterized in that the cup wall edges of the A end shield (11) and of the B end shield (12) receive in themselves and fix the segment pack of the stator on either side to predetermined depths (B, B′) (sic).

6. Electrical universal motor according to one of Claims 1 to 5, characterized in that the anchor body (24) is anchored in the cup shape of the A end shield with a bayonet coupling.

7. Electrical universal motor according to Claim 6, characterized in that to introduce and anchor the anchor body (24) in the cup shape of the A end shield the latter has inner axial longitudinal grooves (25) for receiving and fitting in external wall projections (24c) on the anchor body (24) during introduction, these wall projections (24c) merging in a laterally adjoining manner into wall apertures (20a) into which the projections (24c) of the anchor body (24) latch in the event of a turning movement following the axial introduction movement.

8. Electrical universal motor according to Claim 6 or 7, characterized in that there are provided, in the region of the wall projections (24c) enabling the anchoring between the anchor body (24) and the A end shield, eyelet-like thickened and lengthened portions (24b) which at the same time form thread receiving bores (24d) for the clamping screws (26) which clamp together the A end shield and the B end shield in such a way that as a result of the penetration of the clamping screws the projections (24c) are pressed to a greater extent and as a shaped fit into the wall apertures in the edge (11b) of the A end shield.

9. Electrical universal motor according to Claim 8, characterized in that, in the region of the anchoring between the projections (24c) of the anchor body (24) and the wall apertures (25a) in the edge region of the A end shield, oblique portions or dovetail transition portions are formed to strengthen and secure the fixed seating on clamping together.

10. Electrical universal motor according to one of Claims 1 to 9, characterized in that a metal stabilizing plate (14) which has a protuberance for receiving the rotor shaft ball bearing (18a) is inserted and secured to the cup base (11a) of the cup-shaped A end shield (11).

11. Electrical universal motor according to Claim 10, characterized in that the stabilizing plate (14) connected to the cup base (11a) of the A end shield (11) is held and secured by tabs (15), made of the material, of the A end shield cup base and widened in the head region, these tabs (15) passing through apertures in the stabilizing plate, and in that threaded bores (17) which are accessible through through openings in the cup base are furthermore arranged in the stabilizing plate.

12. Electrical universal motor according to Claim 10 or 11, characterized in that the bulging region (14a) of the stabilizing plate (14), receiving the ball bearing (18) for the rotor shaft (19), projects beyond the external face of the A end shield cup base as a clamping and securing element for the attachment of further components (gears) or securing of the motor.

13. Process for automatically manufacturing the electrical universal motor according to one of Claims 1 to 12, characterized in that
a) a stabilizing plate receiving the appropriate shaft bearing is inserted and secured in a first cup-shaped A end shield, in that
b) thereafter, the rotor, together with rotor shaft and shaft bearings and fan arranged on the shaft, is pushed in and
c) an air guide ring/anchor body is introduced into the A end shield cup shape and is anchored, preferably by a bayonet securing means, in that thereafter
d) the B end shield is placed on the stator, which has been inserted into a narrow passage in the A end shield, and
e) all the parts are clamped to one another by means of internal clamping screws which project from an end face of the B end shield and engage in threaded recesses of the air guide ring/anchor body.

## Revendications

1. Moteur électrique universel pour n'importe quels entraînements, en particulier pour outils électriques à main, machines de bureau, appareils ménagers, appareils de jardinage entraînés par un moteur et analogues, avec un stator (13) et des enroulements de stator, avec un rotor (20) monté de façon à pouvoir tourner avec un collecteur (21), avec des deux côtés des flasques de paliers qui servent en même temps au montage de l'induit ainsi qu'avec des balais (charbons) sur une bague de commutation (35) de façon à pouvoir relativement tourner d'un angle prédéfini et leurs porte-balais, les enroulements du stator et l'enroulement du stator étant respectivement polaires de façon différente, dans les positions de pivotement terminales de la bague de commutation, pour inverser le sens de rotation, moteur électrique universel caractérisé en ce qu'on loge dans le flasque de palier A en forme de pot une pièce d'ancrage (24) de forme annulaire par engagement par la forme, qui sert à serrer intérieurement les flasques de paliers A et B (11, 12) avec le paquet de tôles du stator (13) qui se trouve entre.

2. Moteur électrique universel selon la revendication 1, caractérisé en ce que la pièce d'ancrage (24) sert en même temps d'anneau de guidage de l'air pour l'air de refroidissement aspiré par une roue de ventilateur (22).

3. Moteur électrique universel selon la revendication 2, caractérisé en ce que l'anneau de guidage de l'air formé par la pièce d'ancrage (24) présente un épaulement annulaire (24a) faisant saillie vers l'intérieur pour concentrer et guider le courant d'air qui s'écoule axialement à travers le moteur électrique, sortant de la zone des balais et des surfaces de contact.

4. Moteur électrique universel selon la revendication 3, caractérisé en ce que les bordures des parois en forme de pot (11b, 12a) du flasque de palier A (11) et du flasque de palier B (12) sont disposées à la hauteur des têtes d'enroulement (26) du stator des ouvertures de passage de l'air de refroidissement (12c, 27).

5. Moteur électrique universel selon l'une des revendications 1 à 4, caractérisé en ce que les bordures des parois en forme de pot du flasque de palier A (11) ou du flasque de palier B (12) reçoivent et bloquent le paquet de lamelles du stator des deux côtés sur des valeurs prédéfinies (B, B′).

6. Moteur électrique universel selon l'une des revendications 1 à 5, caractérisé en ce que la pièce d'ancrage (24) est ancrée dans la partie en forme de pot du flasque de palier A selon un emmanchement en baïonnette.

7. Moteur électrique universel selon la revendication 6, caractérisé en ce que pour mettre et ancrer la pièce d'ancrage (24) dans la partie en forme de pot du flasque de palier A, celle-ci présente des rainures longitudinales intérieures axiales (25) qui servent à recevoir et à venir en coïncidence avec des saillies extérieures (24c) de la paroi de la pièce d'ancrage (24) lors de l'introduction, qui se transforment latéralement au voisinage en des interruptions dans la paroi (20a), dans lesquelles s'engagent les saillies (24c) de la pièce d'ancrage (24) lors d'un mouvement de rotation faisant suite au mouvement axial d'introduction.

8. Moteur électrique universel selon la revendication 6 ou 7, caractérisé en ce que dans la zone des saillies de paroi (24c) qui permettent l'ancrage entre la pièce d'ancrage (24) et le flasque de palier A, on prévoit des surépaisseurs et des prolongements (24b) en forme d'oeillets qui constituent en même temps des alésages filetés (24d) pour les boulons de serrage qui serrent ensemble le flasque de palier A et le flasque de palier B de telle façon que grâce à l'enfoncement des boulons de serrage on comprime les saillies (24c) plus fortement et par engagement par la forme dans les interruptions de parois sur le bord (11b) du flasque de palier A.

9. Moteur électrique universel selon la revendication 8, caractérisé en ce que dans la zone de l'ancrage entre les saillies (24c) de la pièce d'ancrage (24) et les interruptions dans la paroi (25a) dans la bordure du flasque de palier A, on forme des chanfreins ou des passages en queue d'aronde qui servent à renforcer et à fixer le siège fixe lors de leur réunion par serrage.

10. Moteur électrique universel selon l'une des revendications 1 à 9, caractérisé en ce que sur le fond (11a) du flasque de palier A en forme de pot (11) on met et on fixe une plaque de stabilisation (14) métallique, présentant un rebord pour recevoir le roulement à billes (18a) de l'axe du rotor.

11. Moteur électrique universel selon la revendication 10, caractérisé en ce que la plaque de stabilisation (14) reliée au fond (11a) du flasque de palier A (11) est maintenue et fixée par des tétons de matière (15), qui vont en s'élargissant dans la zone de leur tête, du fond en forme de pot du flasque de palier A, en ce qu'ils passent à travers les interruptions dans la plaque de stabilisation et en ce que dans la plaque de stabilisation en outre sont disposés des perçages filetés (17) accessibles à travers les orifices de passage dans le fond en forme de pot.

12. Moteur électrique universel selon la revendication 10 ou 11, caractérisé en ce que le bombement (14a) qui reçoit le roulement à billes (18) pour l'arbre du rotor (19) de la plaque de stabilisation (14) fait saillie sous la forme d'un élément de serrage et de fixation pour le montage d'autres composants (boîte de transmission) ou pour la fixation du moteur sur la surface extérieure du fond en forme de pot du flasque de palier A.

13. Procédé pour fabriquer automatiquement le moteur électrique universel selon l'une des revendications 1 à 12, caractérisé en ce que :
a) on met et on fixe une plaque de stabilisation recevant le palier correspondant de l'arbre dans un premier flasque de palier A en forme de pot de telle façon que :
b) à la suite de cela on enfile le rotor avec l'arbre du rotor et les paliers d'arbre et le ventilateur disposé sur l'arbre et ;
c) on met une pièce d'ancrage servant en même temps d'anneau de guidage de l'air dans la partie en forme de pot du flasque de palier A et on l'ancre de préférence par un emmanchement en baïonnette, de telle façon qu'ensuite ;
d) le flasque de palier B est mis sur le stator monté dans un étranglement du flasque de palier A et ;
e) on serre ensemble toutes les pièces au moyen de boulons de serrage qui sortent d'une façon frontale du flasque de palier B et viennent en prise dans des logements filetés de la pièce d'ancrage servant en même temps d'ancrage de guidage de l'air.
